(19) Europäisches Patentamt
European Patent Office
Office européen des brevets

(11) **EP 4 458 773 A1**

(12) **EUROPEAN PATENT APPLICATION**
published in accordance with Art. 153(4) EPC

(43) Date of publication:
06.11.2024 Bulletin 2024/45

(21) Application number: 22916016.3

(22) Date of filing: 26.12.2022

(51) International Patent Classification (IPC):
*C01G 25/02* (2006.01)   *C04B 35/486* (2006.01)
*C01F 17/218* (2020.01)

(52) Cooperative Patent Classification (CPC):
C01F 17/218; C01G 25/02; C04B 35/486

(86) International application number:
PCT/JP2022/047908

(87) International publication number:
WO 2023/127793 (06.07.2023 Gazette 2023/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.12.2021  JP 2021213271

(71) Applicant: Kuraray Noritake Dental Inc.
Kurashiki-shi, Okayama 710-0801 (JP)

(72) Inventors:
• NIWA, Takahiro
Miyoshi-shi
Aichi 470-0293 (JP)

• KASHIKI, Nobusuke
Miyoshi-shi
Aichi 470-0293 (JP)
• NAKANO Kirihiro
Miyoshi-shi
Aichi 470-0293 (JP)
• ITO, Yoshihisa
Miyoshi-shi
Aichi 470-0293 (JP)

(74) Representative: D Young & Co LLP
3 Noble Street
London EC2V 7BQ (GB)

(54) **ZIRCONIA SINTERED BODY AND METHOD FOR PRODUCING SAME**

(57) The present invention provides a zirconia sintered body and a method of production thereof satisfying both high translucency and high strength suitable even for front teeth and canines (particularly, central incisors and lateral incisors). The present invention relates to a zirconia sintered body comprising zirconia, and a stabilizer capable of preventing a phase transformation of zirconia, wherein the zirconia sintered body comprises 20 to 50% of particles having a particle diameter of 0.45 $\mu$m or more and less than 1 $\mu$m in a number-based particle size distribution of its crystal particles, the particle diameter being a diameter passing through the particle's center of gravity.

EP 4 458 773 A1

**Description**

TECHNICAL FIELD

The present invention relates to a zirconia sintered body, and a method for producing same. Specifically, the present invention relates to a zirconia sintered body and a method of production thereof satisfying both high translucency and high strength suitable even for front teeth and canines (particularly, central incisors and lateral incisors).

BACKGROUND ART

Ceramic sintering is generally described as a mass transfer phenomenon in which the free energy of the system decreases. In solid-phase sintering of a ceramic powder, the primary particles contained in the powder undergo grain growth as the surface area and interface decrease with firing time in a manner that depends on the particle diameter and the firing temperature. It is known that grain growth is more likely to take place when particles contained in a powder have smaller diameters, and when the particle size difference before and after the mass transfer is greater.

It is generally understood that ceramic sintered bodies with smaller particle diameters are more likely to show increased grain boundary areas, and exhibit higher strength and higher toughness. It is also commonly acknowledged that ceramic sintered bodies tend to show less scattering of light by the particles, and exhibit enhanced translucency with a greater presence of particles sufficiently larger than the wavelengths of visible light in terms of a particle size. That is, the presence of both small particles and sufficiently large particles is desired for sintered bodies, in order to satisfy both strength and translucency in ceramics.

For example, because of the high strength and high toughness of zirconia as a ceramic material, a zirconia sintered body (hereinafter, also referred to as "partially-stabilized zirconia sintered body") is used in which a small amount of yttria (yttrium oxide; $Y_2O_3$), or a stabilizer, is dissolved to form a solid solution.

In view of aesthetics specific to dental applications, optical properties such as translucency and shade are also required when such partially-stabilized zirconia sintered bodies are used as dental materials, aside from mechanical characteristics such as high strength and high toughness. Previous studies of partially-stabilized zirconia sintered bodies have investigated zirconia sintered bodies having high strength and high toughness, as well as aesthetics, with the purpose of mimicking natural teeth.

Patent Literatures 1 and 2 represent examples. Patent Literature 1 discloses a zirconia sintered body with three classes of zirconia particle diameters categorized based on the converted diameter of each zirconia particle calculated from the computed cross-sectional area of each zirconia particle in a cross-sectional picture of the zirconia sintered body by assuming that each zirconia particle is circular. The three classes of zirconia particle diameters are less than 0.4 $\mu$m, 0.4 $\mu$m or more and less than 0.76 $\mu$m, and 0.76 $\mu$m or more. The cross-sectional area percentages are 4% or more and 35% or less for zirconia particles with a converted particle diameter of less than 0.4 $\mu$m, 24% or more and 57% or less for zirconia particles with a converted particle diameter of 0.4 $\mu$m or more and less than 0.76 $\mu$m, and 16% or more and 62% or less for zirconia particles with a converted particle diameter of 0.76 $\mu$m or more. The zirconia sintered body is disclosed as having high flexural strength and fracture toughness, and adequate transparency. In Example 1, the transmittance is disclosed as 30%.

Patent Literature 2 discloses a translucent zirconia sintered body comprising more than 4.0 mol% and 6.5 mol% or less of yttria, and less than 0.1 wt% of alumina, and having a relative density of 99.82% or more, a total transmittance of 37% or more and less than 40% for light of 600 nm wavelength at a thickness of 1.0 mm, and a flexural strength of 500 MPa or more.

CITATION LIST

Patent Literature

Patent Literature 1: WO2014/142080
Patent Literature 2: JP 2015-143178 A

SUMMARY OF INVENTION

Technical Problem

The present inventors have confirmed that the zirconia sintered body of Patent Literature 1 possesses adequate transparency. However, given the increasing demand for translucency in front teeth and canines (particularly, central incisors and lateral incisors), and a growing need for higher translucency (for example, a target transmittance of approximately 40% or more for certain types of teeth such as central incisors), the zirconia sintered body needs further improvement in translucency to produce dental products for front teeth and canines that satisfy these requirements.

The present inventors have also confirmed that the zirconia sintered body of Patent Literature 2 is low in biaxial flexural strength, presenting room for improvement in terms of strength.

An object of the present invention is to provide a zirconia sintered body and a method of production thereof satisfying both high translucency and high strength suitable even for front teeth and canines (particularly, central incisors and lateral incisors).

Solution to Problem

The present inventors conducted intensive studies to find a solution to the foregoing issues, and found that both high translucency and high strength can be achieved with a zirconia sintered body that comprises 20 to 50% of particles having a particle diameter of 0.45 μm or more and less than 1 μm in a number-based particle size distribution of its crystal particles. This led to the completion of the present invention after further examinations.

Specifically, the present invention includes the following.

[1] A zirconia sintered body comprising zirconia, and a stabilizer capable of preventing a phase transformation of zirconia,

wherein the zirconia sintered body comprises 20 to 50% of particles having a particle diameter of 0.45 μm or more and less than 1 μm in a number-based particle size distribution of its crystal particles,
the particle diameter being a diameter passing through the particle's center of gravity.

[2] The zirconia sintered body according to [1], which comprises 20 to 70% of particles having a particle diameter of less than 0.45 μm in the number-based particle size distribution of its crystal particles.
[3] The zirconia sintered body according to [1] or [2], which comprises 6 to 35% of particles having a particle diameter of 1 μm or more in the number-based particle size distribution of its crystal particles.
[4] The zirconia sintered body according to any one of [1] to [3], wherein the proportion of the tetragonal crystal system with respect to the total of the tetragonal and cubic crystal systems in the crystal systems of the zirconia is 0 to 70% as calculated from the following formula (1),

$$f_{t/(t+c)} = 100 \times I_t/(I_t+I_c) \qquad (1),$$

where $f_{t/(t+c)}$ represents the ratio of tetragonal crystal system/(tetragonal crystal system+cubic crystal system) in the zirconia sintered body by X-ray diffractometry, It represents the height of a peak near $2\theta = 30.2°$ (a peak based on the tetragonal crystal system), and $I_c$ represents the height of a peak near $2\theta = 30.1°$ (a peak based on the cubic crystal system).

[5] The zirconia sintered body according to [4], wherein the proportion of the tetragonal crystal system with respect to the total of the tetragonal and cubic crystal systems is 40 to 65%.
[6] The zirconia sintered body according to any one of [1] to [5], which has a biaxial flexural strength of 550 MPa or more as measured in compliance with JIS T 6526:2012.
[7] The zirconia sintered body according to any one of [1] to [6], wherein the stabilizer is yttria.
[8] The zirconia sintered body according to [7], wherein the content of the yttria is 3.0 to 7.5 mol% relative to the total mole of the zirconia and the yttria.
[9] A method for producing a zirconia sintered body of any one of [1] to [8], comprising producing a zirconia sintered body that comprises zirconia, and a stabilizer capable of preventing a phase transformation of zirconia,

wherein the method uses a raw material powder comprising a zirconia powder, and a stabilizer powder capable of preventing a phase transformation of zirconia, and
the stabilizer powder comprises a powder having at least one peak top in a particle diameter range of 0.05 to 0.40 μm, and at least one peak top in a particle diameter range of 0.5 μm or more in a volume-based particle size distribution.

[10] The method for producing a zirconia sintered body according to [9], wherein the stabilizer powder has a volume-based particle size distribution with a ratio (A):(B) of 40:60 to 85:15, where (A) is the frequency of a peak top in a particle diameter range of 0.05 to 0.40 μm, and (B) is the frequency of a peak top in a particle diameter range of

0.5 μm or more.

[11] The method for producing a zirconia sintered body according to [9] or [10], wherein the stabilizer is yttria.

[12] The method for producing a zirconia sintered body according to [11], wherein the content of the yttria is 3.0 to 7.5 mol% relative to the total mole of the zirconia and the yttria.

[13] The method for producing a zirconia sintered body according to any one of [9] to [12], which molds the raw material powder to fabricate a zirconia molded body.

[14] The method for producing a zirconia sintered body according to [13], which pre-sinters the zirconia molded body to fabricate a zirconia pre-sintered body.

[15] The method for producing a zirconia sintered body according to [13] or [14], which fires the zirconia molded body or the zirconia pre-sintered body.

[16] A method for producing a zirconia pre-sintered body that comprises zirconia, and a stabilizer capable of preventing a phase transformation of zirconia,

wherein the method uses a raw material powder comprising a zirconia powder, and a stabilizer powder capable of preventing a phase transformation of zirconia, and
the stabilizer powder comprises a powder having at least one peak top in a particle diameter range of 0.05 to 0.40 μm, and at least one peak top in a particle diameter range of 0.5 μm or more in a volume-based particle size distribution.

[17] The method for producing a zirconia pre-sintered body according to [16], which molds the raw material powder to fabricate a zirconia molded body.

[18] The method for producing a zirconia pre-sintered body according to [17], which pre-sinters the zirconia molded body.

[19] A method for producing a zirconia-containing composition that comprises zirconia, and a stabilizer capable of preventing a phase transformation of zirconia, comprising:

pulverizing a raw material of the zirconia to fabricate a zirconia powder;
pulverizing a raw material of the stabilizer to fabricate a stabilizer powder; and
mixing the zirconia powder and the stabilizer powder to fabricate a zirconia composition as a raw material powder, the stabilizer powder comprising a powder having at least one peak top in a particle diameter range of 0.05 to 0.40 μm, and at least one peak top in a particle diameter range of 0.5 μm or more in a volume-based particle size distribution.

[20] The method for producing a zirconia-containing composition according to [19], wherein the raw material of the stabilizer is pulverized for 30 hours or less.

[21] The method for producing a zirconia-containing composition according to [19] or [20], wherein the raw material of the zirconia is pulverized for 20 hours or more.

[22] The method for producing a zirconia-containing composition according to any one of [19] to [21], wherein the stabilizer is yttria.

Advantageous Effects of Invention

According to the present invention, a zirconia sintered body and a method of production thereof can be provided that satisfy both high translucency and high strength suitable even for front teeth and canines (particularly, central incisors and lateral incisors). With a production method of the present invention, a zirconia sintered body can be provided that satisfies both high translucency and high strength, even when fired for a short time period.

BRIEF DESCRIPTION OF DRAWINGS

[FIG. 1] FIG. 1 represents particle size distributions (volume-based) of yttria powders used for raw material powders in Examples 1 to 14.

[FIG. 2] FIG. 2 represents an image of the zirconia sintered body of Example 5 observed under an electron microscope.

[FIG. 3] FIG. 3 represents an image of the zirconia sintered body of Comparative Example 1 observed under an electron microscope.

[FIG. 4] FIG. 4 represents an image of the zirconia sintered body of Comparative Example 4 observed under an electron microscope.

DESCRIPTION OF EMBODIMENTS

A zirconia sintered body of the present invention comprises zirconia, and a stabilizer capable of preventing a phase transformation of zirconia,
wherein the zirconia sintered body comprises 20 to 50% of particles having a particle diameter of 0.45 $\mu$m or more and less than 1 $\mu$m in a number-based particle size distribution of its crystal particles. The particle diameter means a diameter passing through the particle's center of gravity. The method of measurement of the number-based particle size distribution is as described in the EXAMPLES section below. The measurement may be made on any portion of the zirconia sintered body, whether it be the surface or the cross section.

In the present specification, the upper limits and lower limits of numeric ranges (for example, ranges of contents of components, ranges of values calculated from components, and ranges of physical properties) can be appropriately combined.

In the present invention, the particle size distribution is number-based. In Patent Literature 1, for example, the examination of particle size distribution is based on area, involving the calculation of total area and selection of area percentages, as indicated in Table 2. However, the present inventors, through examinations of particles based on number, found that particles with a particle diameter of 0.45 $\mu$m or more and less than 1 $\mu$m (hereinafter, also referred to as "medium particles") act to diminish translucency and strength depending on its percentage, together with the influence of the stabilizer. Because Patent Literature 1 involves calculations by area percentage, any presence of a single particle with a large particle diameter significantly alters the area percentage. In contrast, the present invention assesses the percentage of particles by number, allowing for a more efficient enhancement of translucency and strength, which are dependent on the proportion of the presence of particles of each size.

A zirconia sintered body of the present invention comprises 20 to 50% of particles having a particle diameter of 0.45 $\mu$m or more and less than 1 $\mu$m in a number-based particle size distribution of its crystal particles. By confining the percentage of medium particles within the predetermined proportion in the number-based particle size distribution, it is possible to increase translucency, which is mostly dependent on particles with a particle diameter of 1 $\mu$m or more, and strength, which is mostly dependent on particles with a particle diameter of less than 0.45 $\mu$m.

In view of the translucency and strength of the zirconia sintered body, the proportion of medium particles is preferably 21% or more, more preferably 22% or more, even more preferably 23% or more, particularly preferably 24% or more. In view of the translucency and strength of the zirconia sintered body, the proportion of medium particles is preferably 49% or less, more preferably 40% or less, even more preferably 36% or less, particularly preferably 30% or less. The preferred proportions of medium particles may be appropriately combined within these upper limits and lower limits, and may be, for example, 21 to 49%, 22 to 40%, or 23 to 36%.

A proportion of medium particles exceeding 50% in the particle size distribution is not preferable because it leads to reduced strength and translucency in the zirconia sintered body. A proportion of medium particles below 20% in the particle size distribution is not preferable because it may lead to a serious decrease in overall translucency as a result of scattering of light due to the increased refractive index difference between particles with a particle diameter of less than 0.45 $\mu$m (hereinafter, also referred to as "smaller particles") and particles with a particle diameter of 1 $\mu$m or more (hereinafter, also referred to as "larger particles"). The presence of a predetermined proportion of medium particles buffers the refractive index difference, reducing scattering of light as it passes from smaller particles to larger particles.

A zirconia sintered body of the present invention comprises preferably 20 to 70% of particles with a particle diameter of less than 0.45 $\mu$m in the number-based particle size distribution of its crystal particles. In view of further improvement in the strength of the zirconia sintered body, the proportion of smaller particles is more preferably 22% or more, even more preferably 30% or more, particularly preferably 35% or more. In view of further improvement in the strength of the zirconia sintered body, the proportion of smaller particles is more preferably 69% or less, even more preferably 68.5% or less, particularly preferably 68% or less.

A zirconia sintered body of the present invention comprises preferably 6 to 35% of particles with a particle diameter of 1 $\mu$m or more in the number-based particle size distribution of its crystal particles. In view of further improvement in the translucency of the zirconia sintered body, the proportion of larger particles is more preferably 6.5% or more, even more preferably 7% or more, particularly preferably 8% or more. In view of further improvement in the translucency of the zirconia sintered body, the proportion of larger particles is more preferably 33% or less, even more preferably 30% or less, particularly preferably 20% or less.

In view of even superior translucency and strength, the compositional balance of the medium, smaller, and larger particles may be adjusted in a zirconia sintered body of the present invention, aside from the proportions of these particles. In view of even superior translucency and strength, it is preferable in a zirconia sintered body of the present invention that the number-based particle size distribution (%) have the highest proportion of smaller particles among the three classes of particles. More preferably, the proportion of smaller particles is 1.5 times or higher than the proportion of medium particles. In view of even superior translucency and strength, it is preferable in a zirconia sintered body of the present invention that larger particles have the smallest proportion, more preferably 0.8 times or lower than the proportion of medium particles.

A zirconia sintered body of the present invention may be predominantly tetragonal or cubic in crystal system. However, in view of the translucency and strength of the zirconia sintered body, it is preferable to have certain proportions of both tetragonal and cubic crystal systems. Here, the predominant crystal system refers to the crystal system with the highest proportion compared to the other crystal systems, relative to the total amount of all crystal systems (monoclinic, tetragonal, and cubic) in zirconia.

In the zirconia sintered body, the ratio of tetragonal crystal system/(tetragonal crystal system+cubic crystal system) (hereinafter, also referred to as the proportion of the tetragonal crystal system with respect to the total of the tetragonal and cubic crystal systems) is preferably less than 80%. In view of even superior translucency and strength in the zirconia sintered body, the ratio is more preferably 70% or less, even more preferably 65% or less, particularly preferably 50% or less. The ratio is preferably 0% or more. In view of superior strength in the zirconia sintered body, the ratio is more preferably 30% or more. In view of even superior translucency and strength in the zirconia sintered body, the ratio is even more preferably 40% or more, particularly preferably 41% or more. The preferred proportions of the tetragonal crystal system with respect to the total of the tetragonal and cubic crystal systems may be appropriately combined within these upper limits and lower limits, and, may be, for example, 40% or more and 65% or less, or 41% or more and 50% or less.

In a zirconia sintered body of the present invention, the proportion of the tetragonal crystal system with respect to the total of the tetragonal and cubic crystal systems in the crystal systems of zirconia is calculated using the following formula (1),

$$f_{t/(t+c)} = 100 \times I_t/(I_t+I_c) \qquad (1),$$

where $f_{t/(t+c)}$ represents the ratio of tetragonal crystal system/(tetragonal crystal system+cubic crystal system) in the zirconia sintered body by X-ray diffractometry, It represents the height of a peak near $2\theta = 30.2°$ (a peak based on the tetragonal crystal system), and $I_c$ represents the height of a peak near $2\theta = 30.1°$ (a peak based on the cubic crystal system).

The proportion of the tetragonal crystal system with respect to the total of the tetragonal and cubic crystal systems can be calculated from the result of an X-ray diffraction (XRD) measurement conducted, using formula (1).

A zirconia sintered body of the present invention has a biaxial flexural strength of preferably 550 MPa or more, more preferably 600 MPa or more, even more preferably 650 MPa or more, particularly preferably 700 MPa or more. The biaxial flexural strength can be measured in compliance with JIS T 6526:2012, specifically, using the method described in the EXAMPLES section below.

In view of fabricating prostheses similar in shade to natural teeth, particularly front teeth and canines (for example, central incisors, lateral incisors), a zirconia sintered body of the present invention has a translucency ($\Delta L^*$(W-B)) of preferably 13 or more. Particularly, in view of easier fabrication of prostheses with shades even closer to front teeth, the translucency is more preferably 14, even more preferably 15.

The translucency ($\Delta L^*$(W-B)) is calculated as the difference $\Delta L^* = (L_W^*) - (L_B^*)$, where $(Lw^*)$ is the lightness found by measuring chromaticity against a white background using a spectrophotometer (Crystaleye manufactured by Olympus Corporation under this trade name) in 7-band measurement mode with an LED light source, and $(L_B^*)$ is the lightness found by the chromaticity measurement of the same sample conducted against a black background using the same measurement device in the same measurement mode with the same light source. The measurement conditions, including the specimen size, are presented in the EXAMPLES section below.

The stabilizer capable of preventing a phase transformation of zirconia (hereinafter, also referred to simply as "stabilizer") is preferably one capable of forming partially-stabilized zirconia. Examples of the stabilizer include oxides such as calcium oxide (CaO), magnesium oxide (MgO), yttria (yttrium oxide; $Y_2O_3$), cerium oxide ($CeO_2$), scandium oxide ($Sc_2O_3$), niobium oxide ($Nb_2O_5$), lanthanum oxide ($La_2O_3$), erbium oxide ($Er_2O_3$), praseodymium oxide (PreOn, $Pr_2O_3$), samarium oxide ($Sm_2O_3$), europium oxide ($Eu_2O_3$), and thulium oxide ($Tm_2O_3$). Preferred is yttria. The stabilizer may be used alone, or two or more thereof may be used in combination.

The stabilizer content in a zirconia sintered body of the present invention can be measured using techniques, for example, such as inductively coupled plasma (ICP) emission spectral analysis, and X-ray fluorescence analysis.

In a zirconia sintered body of the present invention, the stabilizer content is preferably 0.1 to 18 mol%, more preferably 1 to 15 mol%, even more preferably 1.5 to 10 mol% relative to the total mole of zirconia and stabilizer.

In view of the translucency and strength of the zirconia sintered body, it is preferable in a zirconia sintered body of the present invention that the yttria content be preferably 3.0 mol% or more, more preferably 4.5 mol% or more relative to the total mole of zirconia and yttria, when the stabilizer is yttria. In view of even superior translucency and strength in the zirconia sintered body, the yttria content is even more preferably 5.0 mol% or more.

In view of the translucency and strength of the zirconia sintered body, the yttria content is preferably 7.5 mol% or less, more preferably 7.0 mol% or less, even more preferably 6.5 mol% or less relative to the total mole of zirconia and yttria. The preferred range of yttria content may be a combination of these values appropriately combined within the foregoing upper limits and lower limits, and may be, for example, 3.0 mol% or more and 7.5 mol% or less, or 4.5 mol% or more and 6.5 mol% or less. In certain embodiments, the yttria content may be 4.0 mol% or more.

Another embodiment of the present invention may be, for example, a zirconia sintered body producing method that uses a raw material powder comprising a zirconia powder, and a stabilizer powder capable of preventing a phase transformation of zirconia, and in which the stabilizer powder comprises a powder having at least one peak top in a particle diameter range of 0.05 to 0.40 $\mu$m, and at least one peak top in a particle diameter range of 0.5 $\mu$m or more in a volume-based particle size distribution.

The volume-based particle size distribution can be measured by volume with ultrasonic waves being applied after a slurry diluted with water is subjected to 30 minutes of ultrasonication, using, for example, a laser diffraction/scattering particle size distribution analyzer (manufactured by Horiba Ltd. under the trade name Partica LA-950).

In the zirconia sintered body producing method, the type and content of the stabilizer capable of preventing a phase transformation of zirconia are the same as in the zirconia sintered body described above.

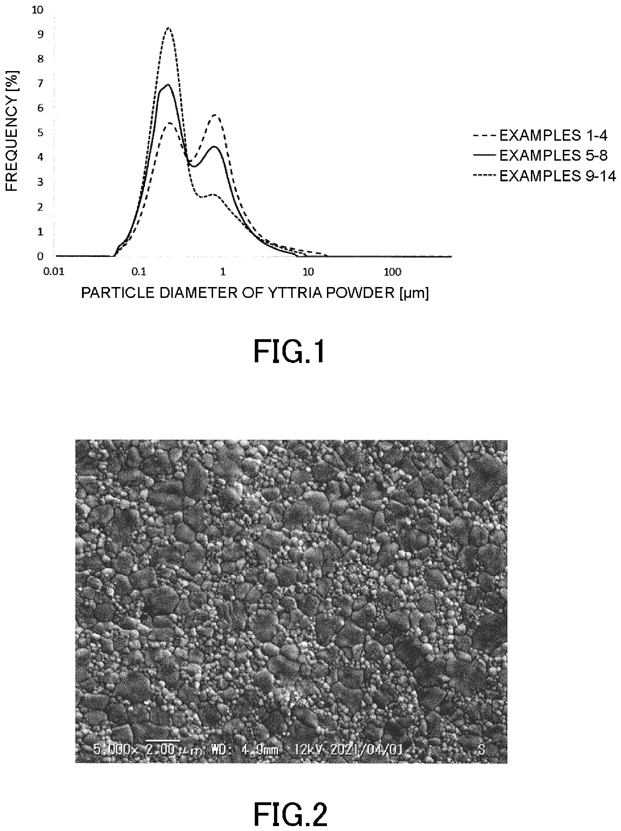

In view of providing the desired proportions of medium particles, larger particles, and smaller particles, the stabilizer powder comprises a powder having at least one peak top in a particle diameter range of 0.05 to 0.40 $\mu$m, and at least one peak top in a particle diameter range of 0.5 $\mu$m or more its volume-based particle size distribution in the zirconia sintered body after firing. Preferably, the stabilizer powder shows a particle size distribution, for example, such as those yielded in the Examples described below (FIG. 1).

In view of ease of providing the desired proportions of medium particles, larger particles, and smaller particles, a certain preferred embodiment is, for example, a zirconia sintered body producing method that uses a raw material powder comprising a zirconia powder, and a stabilizer powder capable of preventing a phase transformation of zirconia, and in which the stabilizer powder comprises a powder having one peak top in a particle diameter range of 0.05 to 0.40 $\mu$m, and one peak top in a particle diameter range of 0.5 $\mu$m or more in its volume-based particle size distribution in the zirconia sintered body after firing.

In view of providing the desired proportions of medium particles, larger particles, and smaller particles, the stabilizer powder has a ratio (A):(B) of preferably 40:60 to 85:15, more preferably 45:55 to 82:18, even more preferably 50:50 to 80:20 in its particle size distribution, where (A) is the frequency of the peak top in a particle diameter range of 0.05 to 0.40 $\mu$m, and (B) is the frequency of the peak top in a particle diameter range of 0.5 $\mu$m or more. The ratio (A):(B) is calculated from the following two formulae.

Ratio (A) = frequency (A) of the peak top/(frequency (A) of the peak top + frequency (B) of the peak top) $\times$ 100

Ratio (B) = frequency (B) of the peak top/(frequency (A) of the peak top + frequency (B) of the peak top) $\times$ 100,

where the frequency (A) of the peak top represents the frequency (%) of the peak top in a particle diameter range of 0.05 to 0.40 $\mu$m, and the frequency (B) of the peak top represents the frequency (%) of the peak top in a particle diameter range of 0.5 $\mu$m or more.

The frequency (A) of the peak top, and the frequency (B) of the peak top can be observed as peak heights, as shown in FIG. 1 for example.

In any of the foregoing embodiments, a particle diameter range of 0.1 to 0.40 $\mu$m may be employed. For example, another certain preferred embodiment is, for example, a zirconia sintered body producing method that uses a raw material powder comprising a zirconia powder, and a stabilizer powder capable of preventing a phase transformation of zirconia, and in which the stabilizer powder comprises a powder having at least one peak top in a particle diameter range of 0.1 to 0.40 $\mu$m, and at least one peak top in a particle diameter range of 0.5 $\mu$m or more in its volume-based particle size distribution.

The zirconia sintered body producing method preferably comprises the step of molding the raw material powder to fabricate a zirconia molded body. The molding method is not particularly limited, and the raw material powder can be molded into the intended desired shape (e.g., a block or disc shape) using a known method (for example, such as press forming).

In view of considerations such as ease of handling, the zirconia molded body has a biaxial flexural strength of preferably 2 to 10 MPa, more preferably 5 to 8 MPa. The biaxial flexural strength of the zirconia molded body can be measured in compliance with JIS T 6526:2012.

The zirconia sintered body producing method preferably comprises the step of pre-sintering the zirconia molded body to fabricate a zirconia pre-sintered body.

In this specification, "zirconia pre-sintered body" refers to a semi-sintered body where zirconia particles (powder) have formed necks, and block formation has taken place without being fully sintered.

In view of enhancing the translucency and strength of the zirconia sintered body, a zirconia pre-sintered body of the present invention has a density of preferably $2.75 \ g/cm^3$ or more, more preferably $2.85 \ g/cm^3$ or more, even more preferably $2.95 \ g/cm^3$ or more.

A zirconia pre-sintered body of the present invention has a flexural strength of preferably 15 MPa or more, in order to ensure strength that enables machining. For easy machining, the pre-sintered body has a flexural strength of preferably 70 MPa or less, more preferably 60 MPa or less.

The flexural strength can be measured in compliance with ISO 6872:2015 (Dentistry-Ceramic Materials). The measurement is conducted using a specimen measuring 5 mm $\times$ 10 mm $\times$ 50 mm. The other conditions are the same except for the specimen size. For surface finishing, the specimen surfaces, including chamfered surfaces (45° chamfers at the corners of specimen), are finished longitudinally with #600 sandpaper. The specimen is disposed in such an orientation that its widest face is perpendicular to the vertical direction (loading direction). In the three-point flexure test, measurements are made at a span length (span) of 30 mm with a crosshead speed of 0.5 mm/min.

A zirconia pre-sintered body of the present invention may comprise additives other than zirconia and the stabilizer, provided that the present invention can exhibit its effects. Examples of the additives include colorants (including pigments, composite pigments, and fluorescent agents), binders, dispersants, antifoaming agents, plasticizers, alumina ($Al_2O_3$), titanium oxide ($TiO_2$), and silica ($SiO_2$). The additives may be used alone, or two or more thereof may be used in combination.

Examples of the pigments include oxides of at least one element selected from the group consisting of Ti, V, Cr, Mn, Fe, Co, Ni, Zn, Y, Zr, Sn, Sb, Bi, Ce, Pr, Sm, Eu, Gd, Tb, and Er (specifically, such as NiO, and $Cr_2O_3$).

Examples of the composite pigments include composite oxides such as $(Zr,V)O_2$, $Fe(Fe,Cr)_2O_4$, $(Ni,Co,Fe)(Fe,Cr)_2O_4 \cdot ZrSiO_4$, and $(Co,Zn)Al_2O_4$.

Examples of the fluorescent agents include $Y_2SiO_5$:Ce, $Y_2SiO_5$:Tb, $(Y,Gd,Eu)BO_3$, $Y_2O_3$:Eu, YAG:Ce, $ZnGa_2O_4$:Zn, and $BaMgAl_{10}O_{17}$:Eu.

Examples of the binders include organic binders. Examples of the organic binders include acrylic binders, paraffinic binders, fatty acid binders, and polyvinyl alcohol binders.

Examples of the dispersants include ammonium polycarboxylates (e.g., triammonium citrate), ammonium polyacrylate, acrylic copolymer resins, acrylic acid ester copolymers, polyacrylic acid, bentonite, carboxymethyl cellulose, anionic surfactants (for example, polyoxyethylene alkyl ether phosphates such as polyoxyethylene lauryl ether phosphate), non-ionic surfactants, oleic glyceride, amine salt surfactants, oligosaccharide alcohols, and stearic acid.

Examples of the antifoaming agents include alcohols, polyethers, silicone, and waxes.

Examples of the plasticizers include polyethylene glycol, glycerin, propylene glycol, and dibutyl phthalic acid.

The pre-sintering temperature is, for example, preferably 800°C or more, more preferably 900°C or more, even more preferably 950°C or more, in order to ensure block formation. For enhanced dimensional accuracy, the pre-sintering temperature is, for example, preferably 1,200°C or less, more preferably 1,150°C or less, even more preferably 1,100°C or less. The preferred pre-sintering temperature for the zirconia pre-sintered body producing method is 800°C to 1,200°C. With such a firing temperature, there probably will be no advancement in the formation of a solid solution of the stabilizer. A known furnace can be used for pre-sintering, without particular restrictions.

A zirconia pre-sintered body of the present invention can be fabricated into a milling workpiece by milling. The milling method is not limited to specific methods, and can be suitably selected as appropriate according to intended use. For example, in the case of a disc-shaped zirconia pre-sintered body, the disc may be milled into the shape of a dental product (for example, a crown-shaped prosthesis) with the CAD/CAM system to fabricate a milling workpiece. Examples of the dental product include copings, frameworks, crowns, crown bridges, abutments, implants, implant screws, implant fixtures, implant bridges, implant burs, brackets, denture bases, inlays, onlays, orthodontic wires, and laminate veneers.

The zirconia sintered body producing method preferably comprises the step of firing a zirconia molded body or zirconia pre-sintered body. The zirconia sintered body can be fabricated by firing a zirconia molded body or zirconia pre-sintered body at a temperature that sinters the zirconia particles (sintering step).

The firing temperature (highest firing temperature) is not particularly limited, and can be appropriately varied according to factors such as the components of the zirconia molded body or zirconia pre-sintered body. However, the firing temperature is preferably 1,350°C or more, more preferably 1,450°C or more, even more preferably 1,500°C or more. The upper limit of firing temperature is not particularly limited, and is, for example, preferably 1,700°C or less, more preferably 1,650°C or less, even more preferably 1,600°C or less. A known furnace can be used for firing, without particular restrictions.

In the sintering step, the holding time at the sinterable temperature (highest firing temperature) is preferably 120 minutes or less, more preferably 90 minutes or less, even more preferably 75 minutes or less, yet more preferably 60 minutes or less, particularly preferably 45 minutes or less, most preferably 30 minutes or less. The holding time may be 25 minutes or less, 20 minutes or less, or 15 minutes or less to enable even shorter firing. The holding time is preferably 1 minute or more, more preferably 5 minutes or more, even more preferably 10 minutes or more. The present invention, even with such a short firing time, enables a reduction in translucency decrease in the zirconia sintered body fabricated, while maintaining high strength. With a reduced firing time, it is also possible to enhance production efficiency and reduce the energy cost.

The rate of temperature increase and the rate of temperature decrease in the sintering step are preferably set to reduce the time required for the sintering step, and are not particularly limited.

Another embodiment of the present invention is, for example, a method for producing a zirconia pre-sintered body, comprising producing a zirconia pre-sintered body that comprises zirconia, and a stabilizer capable of preventing a phase transformation of zirconia,

　　　wherein the method uses a raw material powder comprising a zirconia powder, and a stabilizer powder capable of preventing a phase transformation of zirconia, and
　　　the stabilizer powder comprises a powder having at least one peak top in a particle diameter range of 0.05 to 0.40 $\mu$m, and at least one peak top in a particle diameter range of 0.5 $\mu$m or more in a volume-based particle size distribution.

In the zirconia pre-sintered body producing method, the type and content of the stabilizer capable of preventing a phase transformation of zirconia are the same as in the zirconia sintered body described above. The zirconia pre-sintered body producing method also shares similarities with the zirconia sintered body producing method in terms of the peak tops of the stabilizer powder, and the ratio (A):(B) of the frequency (A) of the peak top in a particle diameter range of 0.05 to 0.40 $\mu$m, and the frequency (B) of the peak top in a particle diameter range of 0.5 $\mu$m or more.

The zirconia pre-sintered body producing method preferably comprises the step of molding a raw material powder to fabricate a zirconia molded body. The molding method is not particularly limited, and the raw material powder can be molded into the intended desired shape (e.g., a block or disc shape) using a known method (for example, such as press forming).

The zirconia pre-sintered body producing method preferably comprises the step of pre-sintering the zirconia molded body to fabricate a zirconia pre-sintered body.

The same pre-sintering temperatures and furnace employed in the zirconia sintered body producing method can be used for pre-sintering in the zirconia pre-sintered body producing method.

Another embodiment of the present invention is, for example, a method for producing a zirconia-containing composition that comprises zirconia, and a stabilizer capable of preventing a phase transformation of zirconia, comprising:

　　　pulverizing a raw material of the zirconia to fabricate a zirconia powder;
　　　pulverizing a raw material of the stabilizer to fabricate a stabilizer powder; and
　　　mixing the zirconia powder and the stabilizer powder to fabricate a zirconia composition as a raw material powder,
　　　the stabilizer powder comprising a powder having at least one peak top in a particle diameter range of 0.05 to 0.40 $\mu$m, and at least one peak top in a particle diameter range of 0.5 $\mu$m or more in a volume-based particle size distribution.

In the zirconia-containing composition producing method, the type and content of the stabilizer capable of preventing a phase transformation of zirconia are the same as in the zirconia sintered body described above.

The following describes an example where the stabilizer is yttria.

Preferably, the yttria raw material is pulverized with a known method (for example, using a ball mill). The yttria raw material is pulverized for preferably 30 hours or less, more preferably 20 hours or less, even more preferably 15 hours or less, particularly preferably 10 hours or less.

The yttria raw material is pulverized for preferably 1 hour or more, more preferably 2 hours or more, even more preferably 5 hours or more. Such a pulverization process yields a stabilizer powder that comprises a powder having at least one peak top in a particle diameter range of 0.05 to 0.40 $\mu$m, and at least one peak top in a particle diameter range of 0.5 $\mu$m or more in a volume-based particle size distribution.

The pulverization time can be appropriately adjusted to provide a yttria powder having the desired peak tops.

With the zirconia-containing composition comprising such a stabilizer powder, the desired proportions of medium particles, larger particles, and smaller particles can be achieved in the zirconia sintered body after firing.

A raw material of zirconia is pulverized to fabricate a zirconia powder, separately from the yttria raw material.

The yttria raw material and zirconia raw material are separately pulverized because, in order for the yttria raw material to yield a yttria powder having the desired peak tops, it is more preferable to employ different pulverization conditions for the yttria raw material and zirconia raw material, such as by using raw materials of different particle sizes, or varying the duration of pulverization for these materials.

In order to achieve the desired proportions of medium particles, larger particles, and smaller particles in the fired zirconia sintered body with the use of a mixed raw material powder of yttria powder and zirconia powder, the average particle diameter (average primary particle diameter) of the yttria raw material for producing a yttria powder with the desired particle size distribution after pulverization is preferably 1.0 $\mu$m or more, more preferably 2.0 $\mu$m or more. In order to achieve the desired proportions of medium particles, larger particles, and smaller particles in the fired zirconia sintered body with the use of a mixed raw material powder of yttria powder and zirconia powder, the average particle diameter of the yttria raw material is preferably less than 10 $\mu$m, more preferably 8 $\mu$m or less. The average particle diameter can be measured by volume with ultrasonic waves being applied after a slurry diluted with water is subjected to 30 minutes of ultrasonication, using, for example, a laser diffraction/scattering particle size distribution analyzer (manufactured by Horiba Ltd. under the trade name Partica LA-950).

In order to achieve the desired proportions of medium particles, larger particles, and smaller particles in the fired zirconia sintered body with the use of a mixed raw material powder of yttria powder and zirconia powder, the average particle diameter (average primary particle diameter) of the zirconia raw material for producing a zirconia powder after pulverization is preferably 0.01 $\mu$m or more, more preferably 0.05 $\mu$m or more, even more preferably 0.1 $\mu$m or more. The average particle diameter of the zirconia raw material is preferably less than 1 $\mu$m, more preferably 0.6 $\mu$m or less, even more preferably 0.4 $\mu$m or less. The average particle diameter of zirconia raw material can be measured using the same method used for the average particle diameter measurement of yttria raw material.

In view of providing excellent translucency while maintaining strength even after brief firing, the zirconia raw material preferably comprises a monoclinic crystal system. The fraction $f_m$ of the monoclinic crystal system in the zirconia raw material is preferably 60% or more with respect to the total amount of the monoclinic, tetragonal, and cubic crystal systems. In view of providing even superior translucency even after brief firing, the fraction $f_m$ is more preferably 70% or more, even more preferably 80% or more, yet more preferably 90% or more, particularly preferably 95% or more.

The fraction $f_m$ of monoclinic crystal system is calculated using the following formula (2).

$$f_m = I_m/(I_m+I_t+I_c) \times 100 \qquad (2),$$

where $f_m$ represents the fraction (%) of the monoclinic crystal system, $I_m$ represents the peak intensity of monoclinic crystal system near $2\theta = 28°$ in XRD measurement, It represents the peak intensity of tetragonal crystal system near $2\theta = 30.2°$ in XRD measurement, and $I_c$ represents the peak intensity of cubic crystal system near $2\theta = 30.1°$ in XRD measurement.

When the zirconia raw material has these fractions $f_m$ of monoclinic crystal system, the resultant zirconia molded body and zirconia pre-sintered body can have the same fractions $f_m$ of monoclinic crystal system.

A zirconia-containing composition of the present invention may comprise additives other than zirconia and the stabilizer, provided that the present invention can exhibit its effects. Examples of the additives include colorants (including pigments, composite pigments, and fluorescent agents), binders, dispersants, antifoaming agents, alumina ($Al_2O_3$), titanium oxide ($TiO_2$), and silica ($SiO_2$). The additives may be used alone, or two or more thereof may be used in combination.

A zirconia-containing composition of the present invention may exist in a dry state, or may be in a state containing a liquid or be in a state of being contained in a liquid. For example, the zirconia-containing composition may have a form of a powder, a paste, or a slurry.

The present invention encompasses embodiments combining the foregoing features in various ways within the technical idea of the present invention, provided that the present invention can exhibit its effects.

EXAMPLES

The present invention is described below in greater detail using Examples. It is to be noted, however, that the present invention is in no way limited by the following, and various changes may be made by a person with ordinary skill in the art within the technical idea of the present invention.

[Raw Materials]

The following raw materials 1, 2, and 3 were used as zirconia raw material and yttria raw material.

Raw material 1: A zirconia powder with 99% or more of monoclinic crystal system, an average primary particle diameter of 100 nm, and an average particle diameter of 11 $\mu$m for secondary particles.

Raw material 2: A yttria powder with an average particle diameter of approximately 3,200 nm.

Raw material 3: A zirconia powder Zpex Smile® manufactured by Tosoh Corporation.

[Examples 1 to 14]

<Fabrication of Zirconia Slurry>

The zirconia raw material (raw material 1) was introduced into water. Subsequently, the mixture was placed in a rotary container with zirconia beads, and the raw material was pulverized (crushed) by ball milling to provide the desired average particle diameter (approximately 100 nm) for the particles contained in the slurry. The particle diameter was measured by volume with ultrasonic waves being applied after a slurry diluted with water was subjected to 30 minutes of ultrasonication, using a laser diffraction/scattering particle size distribution analyzer (manufactured by Horiba Ltd. under the trade name Partica LA-950). The desired zirconia slurry was obtained after about 20 hours of ball milling.

<Fabrication of Yttria Slurry>

The yttria raw material (raw material 2) was introduced into water. Subsequently, the mixture was placed in a rotary container with zirconia beads, and the raw material was pulverized by ball milling to provide the desired particle diameter (a ratio (A):(B) of 50:50 to 79:21 between the peak top frequency (A) in a range of 0.05 to 0.40 $\mu$m, and the peak top frequency (B) in a range of 0.50 $\mu$m or more) for the particles contained in the slurry. The particle diameter was measured by volume with ultrasonic waves being applied after a slurry diluted with water was subjected to 30 minutes of ultrasonication, using a laser diffraction/scattering particle size distribution analyzer (manufactured by Horiba Ltd. under the trade name Partica LA-950). The desired yttria slurry was obtained after about 6 to 20 hours of ball milling.

Subsequently, the zirconia slurry and yttria slurry were mixed, and stirred with rotary vanes after adding an organic binder. The resultant slurry was dried to granulate with a spray dryer to obtain a powder. The powder had an average particle diameter of 40 $\mu$m. The powder was then poured into a columnar die, and uniaxially pressed under 33 MPa pressure, followed by a CIP process at 170 MPa to obtain a molded body. The molded body was placed in an electric furnace, and the temperature was increased from room temperature at 10°C/min. After being retained at 500°C for 2 hours to debind the organic component, the molded body was held at 1,000°C for 2 hours, and allowed to cool at -0.4°C/min to obtain a zirconia pre-sintered body. The zirconia pre-sintered body was heated to the firing temperature (highest firing temperature) of Table 1 at 10°C/min, and retained for the duration presented in Table 1 to obtain a zirconia sintered body.

[Comparative Examples 1 to 3]

The zirconia raw material (raw material 1) and yttria raw material (raw material 2) were introduced into water. These were placed in a rotary container with zirconia beads, and pulverized by ball milling. Here, the duration of ball milling was adjusted to prepare a larger-particle powder having a larger average particle diameter (an average particle diameter of 0.4 $\mu$m), and a smaller-particle powder having a smaller average particle diameter (0.08 $\mu$m). The particle diameter was measured by volume with ultrasonic waves being applied after a slurry diluted with water was subjected to 30 minutes of ultrasonication, using a laser diffraction/scattering particle size distribution analyzer (manufactured by Horiba Ltd. under the trade name Partica LA-950).

Subsequently, the larger-particle powder and smaller-particle powder were mixed. These were mixed at a mixing ratio of 1:2 to 2:1. After adding titanium oxide, aluminum oxide, and an organic binder to the slurry obtained, the mixture was stirred with rotary vanes. The resultant slurry was dried to granulate with a spray dryer to obtain a powder. The powder had an average particle diameter of 40 $\mu$m. The powder was then poured into a columnar die, and uniaxially pressed under 33 MPa pressure, followed by a CIP process at 170 MPa to obtain a molded body. The molded body was placed in an electric furnace, and the temperature was increased from room temperature at 10°C/min. After being retained at 500°C for 2 hours to debind the organic component, the molded body was held at 1,000°C for 2 hours, and allowed to cool at -0.4°C/min to obtain a zirconia pre-sintered body. The zirconia pre-sintered body was heated to the firing temperature (highest firing temperature) of Table 1 at 10°C/min, and retained for the duration presented in Table 1 to obtain a zirconia sintered body.

[Comparative Example 4]

The zirconia powder Zpex Smile® (manufactured by Tosoh Corporation; raw material 3) was poured into a columnar die, and uniaxially pressed under 33 MPa pressure, followed by a CIP process at 170 MPa to obtain a molded body. The molded body was placed in an electric furnace, and the temperature was increased from room temperature at 10°C/min. After being retained at 500°C for 2 hours to debind the organic component, the molded body was held at 1,000°C for 2 hours, and allowed to cool at -0.4°C/min to obtain a zirconia pre-sintered body. The zirconia pre-sintered body was heated to the firing temperature (highest firing temperature) of Table 1 at 10°C/min, and retained for the duration presented in Table 1 to obtain a zirconia sintered body.

The zirconia sintered bodies produced in Examples and Comparative Examples were measured for various properties, using the following methods.

<Measurement Method of Particle Size Percentage by Number>

For the sintered body obtained in each Example and Comparative Example, surface images (SEM images) were captured with a scanning electron microscope (VE-9800 manufactured by Keyence under this trade name).

After indicating grain boundaries on individual crystal grains in the captured image, the crystal grain size was calculated by image analysis.

The particle diameter was measured using image analysis software (Image-Pro Plus ver. 7.0.1 manufactured by Hakuto Co., Ltd. under this trade name). The captured SEM image was subjected to binarization, and the brightness range was adjusted to enhance clarity of the grain boundaries, allowing for the recognition of particles in the field (region).

The particle diameter from Image-Pro Plus represents the diameter through the center of gravity of the particle, and it is the average of the measurements of the length of a line segment connecting the contour line and passing through the center of gravity determined from the contour line of the particle, conducted at 2-degree intervals with the center of gravity as the central point (the average of 180 particles).

The measurement was conducted for particles not extending beyond the edges of the image. Note that particles not extending beyond the edges of the image are particles excluding those with contour lines extending beyond the screen of the SEM photographic image (particles with their contour lines interrupted by the boundary lines at the top, bottom, left, and right).

To select the crystal grain size of all particles not extending beyond the edges of the image, the option in Image-Pro Plus was used that excludes particles lying on the boundary lines.

The particle diameters of individual particles were determined in three fields for a sample from each Example and Comparative Example.

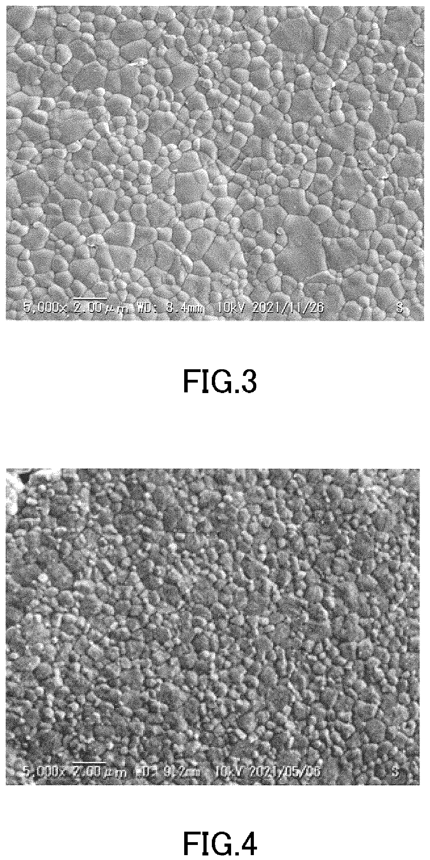

FIG. 2 shows a SEM image of the zirconia sintered body of Example 5. FIG. 3 shows a SEM image of the zirconia sintered body of Comparative Example 1. FIG. 4 shows a SEM image of the zirconia sintered body of Comparative Example 4.

The particle size data acquired in each Example and Comparative Example was categorized into three classes: less than 0.45 $\mu$m, 0.45 $\mu$m or more and less than 1.0 $\mu$m, and 1.0 $\mu$m or more. Subsequently, the percentage of data count within each particle size range was calculated based on a total data count of 100%.

<Measurement Method of Translucency of Sintered Body>

The zirconia sintered body obtained was ground into a 1.20 mm-thick plate sample. The sample was then measured for lightness (Lw*) by measuring chromaticity against a white background using a spectrophotometer (Crystaleye manufactured by Olympus Corporation under this trade name) in 7-band measurement mode with an LED light source. The same sample was also measured for lightness ($L_B$*) by measuring chromaticity against a black background using the same measurement device in the same measurement mode with the same light source. The difference between these values ($\Delta$L* = (Lw*) - ($L_B$*)) was then determined as the translucency

$$(\Delta L^*(W\text{-}B)) \ (n = 3).$$

The average values of the measurements are presented in Table 1. The translucency $\Delta$L*(W-B) was assessed as "Good" for 15 or greater, "Moderate" for 13 or greater and less than 15, and "Poor" for less than 13. In view of fabricating prostheses with shades resembling natural teeth (particularly, front teeth and canines), the preferred translucency $\Delta$L*(W-B) is 13 or greater, more preferably 14 or greater, even more preferably 15 or greater.

<Measurement Method of Biaxial Flexural Strength of Sintered Body>

A sample measuring 15 mm in diameter and 1.2 mm in thickness was obtained from the zirconia sintered body. The sintered body sample was measured for biaxial flexural strength at a crosshead speed of 1.0 mm/min in compliance with JIS T 6526:2012, using an autograph (a universal precision testing machine manufactured by Shimadzu Corporation under the trade name AG-I 100kN) (n = 5). The biaxial flexural strength was assessed as "Good" for 550 MPa or greater, and "Poor" for less than 550 MPa.

<Measurement Method of Crystal System Ratio of Tetragonal Crystal System/Cubic Crystal System>

The surface of the zirconia sintered body was polished to mirror finish, and the ratio of crystal systems was determined by X-ray diffractometry (XRD) using the following formula.

$$f_{t/(t+c)} = 100 \times I_t/(I_t+I_c) \qquad (1),$$

where $f_{t/(t+c)}$ represents the ratio of tetragonal crystal system/(tetragonal crystal system+cubic crystal system) in the zirconia sintered body, $I_t$ represents the height of a peak near $2\theta = 30.2°$ (a peak based on the tetragonal crystal system), and $I_c$ represents the height of a peak near $2\theta = 30.1°$ (a peak based on the cubic crystal system).

[Table 1]

| | Yttria powder | | | | Firing conditions | |
|---|---|---|---|---|---|---|
| | Yttria content (mol%) | Peak top frequency in particle size distribution (%) | | Ratio (A): (B) | Firing temperature (°C) | Holding time (min) |
| | | (A): 0.05 to 0.40 $\mu$m | (B): 0.50 $\mu$m or more | | | |
| Ex. 1 | 5.5 | 5.58 | 5.65 | 50:50 | 1550 | 7 |
| Ex. 2 | 5.5 | 5.58 | 5.65 | 50:50 | 1550 | 30 |
| Ex. 3 | 5.5 | 5.58 | 5.65 | 50:50 | 1550 | 60 |
| Ex. 4 | 5.5 | 5.58 | 5.65 | 50:50 | 1550 | 120 |
| Ex. 5 | 5.5 | 6.96 | 4.35 | 62:38 | 1550 | 7 |
| Ex. 6 | 5.5 | 6.96 | 4.35 | 62:38 | 1550 | 30 |
| Ex. 7 | 5.5 | 6.96 | 4.35 | 62:38 | 1550 | 60 |
| Ex. 8 | 5.5 | 6.96 | 4.35 | 62:38 | 1550 | 120 |
| Ex. 9 | 5.5 | 9.27 | 2.44 | 79:21 | 1550 | 7 |
| Ex. 10 | 5.5 | 9.27 | 2.44 | 79:21 | 1550 | 30 |
| Ex. 11 | 5.5 | 9.27 | 2.44 | 79:21 | 1550 | 60 |
| Ex. 12 | 5.5 | 9.27 | 2.44 | 79:21 | 1550 | 120 |
| Ex. 13 | 4.5 | 9.27 | 2.44 | 79:21 | 1550 | 120 |
| Ex. 14 | 6.0 | 9.27 | 2.44 | 79:21 | 1550 | 60 |
| Com. Ex. 1 | 4.0 | Unmeasurable | | | 1500 | 120 |
| Com. Ex. 2 | 4.0 | Unmeasurable | | | 1500 | 120 |
| Com. Ex. 3 | 4.0 | Unmeasurable | | | 1500 | 120 |
| Com. Ex. 4 | 5.5 | Solid-solution raw material | | | 1450 | 120 |

In the table, the yttria content represents the content relative to the total mole of zirconia and yttria.

Table 1 Continued

| | Zirconia sintered body | | | | | | | |
| | Number-based particle size distribution (%) | | | Crystal system ratio | Biaxial flexural strength (MPa) | | Translucency ΔL* | |
| | Less than 0.45 μm | 0.45 μm or more and less than 1.0 μm | 1.0 μm or more | Tetragonal crystal system! (tetragonal crystal system + cubic crystal system) (%) | | | | |
|---|---|---|---|---|---|---|---|---|
| Ex. 1 | 63.0 | 24.7 | 12.3 | 45 | 923 | Good | 14.3 | Moderate |
| Ex. 2 | 55.4 | 26.2 | 18.4 | 44 | 895 | Good | 14.2 | Moderate |
| Ex. 3 | 35.6 | 36.2 | 28.2 | 45 | 887 | Good | 14.0 | Moderate |
| Ex. 4 | 28.8 | 42.3 | 28.9 | 44 | 832 | Good | 14.4 | Moderate |
| Ex. 5 | 64.1 | 27.0 | 8.9 | 43 | 920 | Good | 15.8 | Good |
| Ex. 6 | 49.2 | 27.9 | 22.9 | 42 | 877 | Good | 15.6 | Good |
| Ex. 7 | 48.4 | 31.0 | 20.6 | 43 | 857 | Good | 15.5 | Good |
| Ex. 8 | 24.4 | 44.2 | 31.4 | 42 | 803 | Good | 16.1 | Good |
| Ex. 9 | 67.1 | 25.0 | 7.9 | 42 | 859 | Good | 15.1 | Good |
| Ex. 10 | 61.7 | 28.3 | 10.0 | 41 | 827 | Good | 15.9 | Good |
| Ex. 11 | 41.5 | 30.7 | 27.8 | 42 | 810 | Good | 15.7 | Good |
| Ex. 12 | 22.7 | 45.6 | 31.7 | 42 | 801 | Good | 15.7 | Good |
| Ex. 13 | 28.7 | 49.1 | 22.2 | 70 | 936 | Good | 13.8 | Moderate |
| Ex. 14 | 33.7 | 36.0 | 30.3 | 0 | 708 | Good | 16.1 | Good |
| Com. Ex. 1 | 45.3 | 52.0 | 2.7 | 82 | 972 | Good | 7.8 | Poor |
| Com. Ex. 2 | 20.1 | 62.7 | 17.2 | 78 | 943 | Good | 8.4 | Poor |
| Com. Ex. 3 | 42.9 | 51.0 | 6.1 | 80 | 961 | Good | 8.4 | Poor |
| Com. Ex. 4 | 34.0 | 52.0 | 14.0 | 39 | 494 | Poor | 14.2 | Moderate |

The results confirmed that the zirconia sintered bodies of the present invention can satisfy both high translucency and high strength suitable even for front teeth and canines (particularly, central incisors and lateral incisors). The zirconia sintered bodies of the present invention also exhibited outstanding translucency even after brief sintering, and showed increased strength compared to that achievable by normal firing (120-minute retention at the highest firing temperature), confirming that high translucency and strength can be satisfied even with brief firing.

In contrast, Comparative Examples 1 to 3 did not show the proportions of medium particles observed in Examples. By the absence of the proportions of medium particles observed in Examples, Comparative Examples 1 to 3 failed to exhibit high translucency. In Comparative Example 4 corresponding to Patent Literature 2, the yttria raw material was not separated as a raw material, and yttria was dissolved in zirconia as a solid solution. This led to the failure to show the proportions of medium particles seen in Examples, resulting in a lack of high strength.

Comparative Examples 1 to 3 correspond to Examples 24, 26, and 1, respectively, of Patent Literature 1 (WO2014/142080), as indicated in Table 2 below.

Table 2]

| | Patent Literature 1 | Number-based particle size distribution (%) | | | Particle size distribution based on method of Patent Literature 1 (area percentage) *Percentages in parentheses are values presented in Table 5 of Patent Literature 1 | | |
|---|---|---|---|---|---|---|---|
| | | Less than 0.45 $\mu$m | 0.45 $\mu$m or more and less than 1.0 $\mu$m | 1.0 $\mu$m or more | Less than 0.4 $\mu$m | 0.4 $\mu$m or more and less than 0.76 $\mu$m | 0.76 $\mu$m or more |
| Com. Ex. 1 | Ex. 24 | 45.3% | 52.0% | 2.3% | 26% (28%) | 26% (25%) | 48% (47%) |
| Com. Ex. 2 | Ex. 26 | 20.1% | 62.7% | 17.2% | 17% (15%) | 26% (25%) | 57% (60%) |
| Com. Ex. 3 | Ex. 1 | 42.9% | 51.0% | 6.1% | 14% (11%) | 39% (42%) | 46% (47%) |

INDUSTRIAL APPLICABILITY

A zirconia sintered body of the present invention can be suitably used for dental applications. A zirconia sintered body of the present invention is particularly useful as a dental prosthesis for front teeth and canines (particularly, central incisors and lateral incisors).

**Claims**

1.   A zirconia sintered body comprising zirconia, and a stabilizer capable of preventing a phase transformation of zirconia,

wherein the zirconia sintered body comprises 20 to 50% of particles having a particle diameter of 0.45 $\mu$m or more and less than 1 $\mu$m in a number-based particle size distribution of its crystal particles,
the particle diameter being a diameter passing through the particle's center of gravity.

2.   The zirconia sintered body according to claim 1, which comprises 20 to 70% of particles having a particle diameter of less than 0.45 $\mu$m in the number-based particle size distribution of its crystal particles.

3.   The zirconia sintered body according to claim 1 or 2, which comprises 6 to 35% of particles having a particle diameter of 1 $\mu$m or more in the number-based particle size distribution of its crystal particles.

4.   The zirconia sintered body according to any one of claims 1 to 3, wherein the proportion of the tetragonal crystal system with respect to the total of the tetragonal and cubic crystal systems in the crystal systems of the zirconia is 0 to 70% as calculated from the following formula (1),

$$f_{t/(t+c)} = 100 \times I_t/(I_t+I_c) \qquad (1),$$

where $f_{t/(t+c)}$ represents the ratio of tetragonal crystal system/(tetragonal crystal system+cubic crystal system) in the zirconia sintered body by X-ray diffractometry, It represents the height of a peak near $2\theta = 30.2°$ (a peak based on the tetragonal crystal system), and $I_c$ represents the height of a peak near $2\theta = 30.1°$ (a peak based on the cubic crystal system).

5.   The zirconia sintered body according to claim 4, wherein the proportion of the tetragonal crystal system with respect to the total of the tetragonal and cubic crystal systems is 40 to 65%.

6.   The zirconia sintered body according to any one of claims 1 to 5, which has a biaxial flexural strength of 550 MPa or more as measured in compliance with JIS T 6526:2012.

7.   The zirconia sintered body according to any one of claims 1 to 6, wherein the stabilizer is yttria.

8.   The zirconia sintered body according to claim 7, wherein the content of the yttria is 3.0 to 7.5 mol% relative to the total mole of the zirconia and the yttria.

9. A method for producing a zirconia sintered body of any one of claims 1 to 8, comprising producing a zirconia sintered body that comprises zirconia, and a stabilizer capable of preventing a phase transformation of zirconia,

   wherein the method uses a raw material powder comprising a zirconia powder, and a stabilizer powder capable of preventing a phase transformation of zirconia, and
   the stabilizer powder comprises a powder having at least one peak top in a particle diameter range of 0.05 to 0.40 μm, and at least one peak top in a particle diameter range of 0.5 μm or more in a volume-based particle size distribution.

10. The method for producing a zirconia sintered body according to claim 9, wherein the stabilizer powder has a volume-based particle size distribution with a ratio (A):(B) of 40:60 to 85:15, where (A) is the frequency of a peak top in a particle diameter range of 0.05 to 0.40 μm, and (B) is the frequency of a peak top in a particle diameter range of 0.5 μm or more.

11. The method for producing a zirconia sintered body according to claim 9 or 10, wherein the stabilizer is yttria.

12. The method for producing a zirconia sintered body according to claim 11, wherein the content of the yttria is 3.0 to 7.5 mol% relative to the total mole of the zirconia and the yttria.

13. The method for producing a zirconia sintered body according to any one of claims 9 to 12, which molds the raw material powder to fabricate a zirconia molded body.

14. The method for producing a zirconia sintered body according to claim 13, which pre-sinters the zirconia molded body to fabricate a zirconia pre-sintered body.

15. The method for producing a zirconia sintered body according to claim 13 or 14, which fires the zirconia molded body or the zirconia pre-sintered body.

16. A method for producing a zirconia pre-sintered body that comprises zirconia, and a stabilizer capable of preventing a phase transformation of zirconia,

   wherein the method uses a raw material powder comprising a zirconia powder, and a stabilizer powder capable of preventing a phase transformation of zirconia, and
   the stabilizer powder comprises a powder having at least one peak top in a particle diameter range of 0.05 to 0.40 μm, and at least one peak top in a particle diameter range of 0.5 μm or more in a volume-based particle size distribution.

17. The method for producing a zirconia pre-sintered body according to claim 16, which molds the raw material powder to fabricate a zirconia molded body.

18. The method for producing a zirconia pre-sintered body according to claim 17, which pre-sinters the zirconia molded body.

19. A method for producing a zirconia-containing composition that comprises zirconia, and a stabilizer capable of preventing a phase transformation of zirconia, comprising:

   pulverizing a raw material of the zirconia to fabricate a zirconia powder;
   pulverizing a raw material of the stabilizer to fabricate a stabilizer powder; and
   mixing the zirconia powder and the stabilizer powder to fabricate a zirconia composition as a raw material powder, the stabilizer powder comprising a powder having at least one peak top in a particle diameter range of 0.05 to 0.40 μm, and at least one peak top in a particle diameter range of 0.5 μm or more in a volume-based particle size distribution.

20. The method for producing a zirconia-containing composition according to claim 19, wherein the raw material of the stabilizer is pulverized for 30 hours or less.

21. The method for producing a zirconia-containing composition according to claim 19 or 20, wherein the raw material of the zirconia is pulverized for 20 hours or more.

22. The method for producing a zirconia-containing composition according to any one of claims 19 to 21, wherein the stabilizer is yttria.

FIG.1

FIG.2

FIG.3

FIG.4

## INTERNATIONAL SEARCH REPORT

| International application No. |
| --- |
| **PCT/JP2022/047908** |

### A. CLASSIFICATION OF SUBJECT MATTER

*C01G 25/02*(2006.01)i; *C04B 35/486*(2006.01)i; *C01F 17/218*(2020.01)i
FI:    C04B35/486; C01G25/02; C01F17/218

According to International Patent Classification (IPC) or to both national classification and IPC

### B. FIELDS SEARCHED

Minimum documentation searched (classification system followed by classification symbols)

C01G25/02; C04B35/486; C01F17/218

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2015-143178 A (TOSOH CORP.) 06 August 2015 (2015-08-06)<br>entire text | 1-22 |
| A | JP 2011-73907 A (WORLD LAB KK) 14 April 2011 (2011-04-14)<br>entire text, all drawings | 1-22 |
| A | JP 2009-269812 A (TOSOH CORP.) 19 November 2009 (2009-11-19)<br>entire text, all drawings | 1-22 |
| A | JP 2010-514665 A (3M INNOVATIVE PROPERTIES CO.) 06 May 2010 (2010-05-06)<br>entire text, all drawings | 1-22 |
| A | WO 2014/142080 A1 (KURARAY NORITAKE DENTAL INC.) 18 September 2014 (2014-09-18)<br>entire text, all drawings | 1-22 |
| A | WO 2018/056330 A1 (KURARAY NORITAKE DENTAL INC.) 29 March 2018 (2018-03-29)<br>entire text, all drawings | 1-22 |

| ✓ Further documents are listed in the continuation of Box C. | ✓ See patent family annex. |
| --- | --- |

\*    Special categories of cited documents:
"A"   document defining the general state of the art which is not considered to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
| --- | --- |
| **10 February 2023** | **21 February 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2022/047908**

**C. DOCUMENTS CONSIDERED TO BE RELEVANT**

| Category* | Citation of document, with indication, where appropriate, of the relevant passages | Relevant to claim No. |
|---|---|---|
| P, A | WO 2022/138881 A1 (KURARAY NORITAKE DENTAL INC.) 30 June 2022 (2022-06-30) entire text, all drawings | 1-22 |

Form PCT/ISA/210 (second sheet) (January 2015)

**INTERNATIONAL SEARCH REPORT**
**Information on patent family members**

International application No.

**PCT/JP2022/047908**

| Patent document cited in search report | | | Publication date (day/month/year) | Patent family member(s) | | | Publication date (day/month/year) |
|---|---|---|---|---|---|---|---|
| JP | 2015-143178 | A | 06 August 2015 | US | 2016/0310245 | A1 | |
| | | | | whole document | | | |
| | | | | WO | 2015/098765 | A1 | |
| | | | | EP | 3088373 | A1 | |
| | | | | KR | 10-2016-0100914 | A | |
| | | | | CN | 105829264 | A | |
| JP | 2011-73907 | A | 14 April 2011 | (Family: none) | | | |
| JP | 2009-269812 | A | 19 November 2009 | US | 2011/0027742 | A1 | |
| | | | | whole document, all drawings | | | |
| | | | | WO | 2009/125793 | A1 | |
| | | | | EP | 2263988 | A1 | |
| | | | | CA | 2719340 | A1 | |
| | | | | CN | 101998939 | A | |
| JP | 2010-514665 | A | 06 May 2010 | US | 2010/0041542 | A1 | |
| | | | | whole document, all drawings | | | |
| | | | | WO | 2008/083282 | A2 | |
| | | | | EP | 2104654 | A1 | |
| | | | | CN | 101573308 | A | |
| WO | 2014/142080 | A1 | 18 September 2014 | US | 2016/0016853 | A1 | |
| | | | | whole document, all drawings | | | |
| | | | | EP | 2975011 | A1 | |
| | | | | CN | 105026337 | A | |
| | | | | KR | 10-2015-0124969 | A | |
| WO | 2018/056330 | A1 | 29 March 2018 | US | 2020/0317581 | A1 | |
| | | | | whole document, all drawings | | | |
| | | | | EP | 3517518 | A1 | |
| | | | | CN | 109689593 | A | |
| | | | | KR | 10-2019-0047701 | A | |
| WO | 2022/138881 | A1 | 30 June 2022 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014142080 A

- JP 2015143178 A